# EUROPEAN PATENT APPLICATION

(11) **EP 1 553 337 A1**
(43) Date of publication of application: **13.07.2005**
(21) Application number: 03741294.7
(22) Date of filing: 09.07.2003
(51) Int. Cl.: F16K 1/38

(54) **FLUID CONTROLLER**

(30) Priority: 09.07.2002 JP 2002199912
(71) Applicant: Fujikin Incorporated, Osaka-shi, Osaka 550-0012 (JP)
(72) Inventor: MATSUHASHI, Ryo, c/o NIPPON STEEL CORPORATION, Futtsu-shi, Chiba 293-0011 (JP); SUETSUGU, Kazuhiro, c/o NIPPON STEEL CORPORATION, Tokyo 100-0004 (JP); MIYAGAWA, Hideyuki, c/o FUJIKIN INCORPORATED, Osaka-shi, Osaka 550-0012 (JP); KITA, Toshio, c/o FUJIKIN INCORPORATED, Osaka-shi, Osaka 550-0012 (JP); SOGABE, Kyota, c/o FUJIKIN INCORPORATED, Osaka-shi, Osaka 550-0012 (JP); YOSHIKAWA, Kazuhiro, c/o FUJIKIN INCORPORATED, Osaka-shi, Osaka 550-0012 (JP); MORIMOTO, Akihiro, c/o FUJIKIN INCORPORATED, Osaka-shi, Osaka 550-0012 (JP); SATO, Jyunji, c/o FUJIKIN INCORPORATED, Osaka-shi, Osaka 550-0012 (JP); DAIDO, Kunihiko, c/o FUJIKIN INCORPORATED, Osaka-shi, Osaka 550-0012 (JP); MAEDA, Hirokatsu, c/o FUJIKIN INCORPORATED, Osaka-shi, Osaka 550-0012 (JP)
(74) Representative: Paul, Dieter-Alfred, Dipl.-Ing.
(86) International application number: PCT/JP2003/008697
(87) International publication number: WO 2004/005777

(57) **Abstract**

A fluid control device 1 comprises a metal body 2 having a fluid inlet channel 2a, a fluid outlet channel 2b and a communication channel 2c for holding the two channels in communication, and a metal slide member 3 vertically movable in a vertical passage 11 including the communication channel 2c for closing or opening the communication channel 2c with an end portion thereof. At least the end portion 3a of the slide member 3 is made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0. 3% of N, and the balance substantially Fe and other inevitable impurities.

## Description

### TECHNICAL FIELD

The present invention relates to valves and like fluid control devices for use in piping systems and fluid control apparatus.

### BACKGROUND ART

Fluid control devices are already known which comprise a metal body having a fluid inlet channel, a fluid outlet channel and a communication channel extending vertically for holding the two channels in communication, and a metal stem vertically movable inside a vertical passage including the communication channel to thereby close or open the communication channel with its one end. The body and the stem are generally made of SUS316. Since the stem is slidable to close the passage, the device has the problem that the use of the device for a prolonged period of time results in impaired sealing properties due to abrasion. To avoid this problem, it is practice to reinforce the stem at the portion of its forward end to be in sliding contact with the passage with a hardfacing material.

The fluid control device encounters the problem that the reinforcing work with the hardfacing material requires time and labor. Accordingly, it is also practice to make the stem from SUS530, but there arises anew another problem that the stem is lower in hardness and corrosion resistance, hence there is a need to ameliorate this problem.

An object of the present invention is to provide a fluid control device wherein the portion slidable in contact with another portion is given improved durability so as to eliminate the need for reinforcement with a hardfacing material.

### DISCLOSURE OF THE INVENTION

The present invention provides a fluid control device comprising a metal body having a fluid inlet channel, a fluid outlet channel and a communication channel for holding the two channels in communication, and a metal slide member vertically movable in a vertical passage including the communication channel for closing or opening the communication channel with an end portion thereof, the fluid control device being characterized in that that at least the end portion of the slide member is made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities.

With the fluid control device of the invention, at least the end portion of the slide member, i.e. , at least the portion thereof for closing or opening the communication channel, is made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities. The slide member end portion therefore has improved abrasion resistance and usable for a prolonged period of time without resulting in impaired sealing properties while remaining unimpaired in any of corrosion resistance, strength and hardness. The slide member portion therefore retains the other properties and need not be reinforced with a hardfacing material, consequently diminishing the time and labor required for the work procedure.

As a preferred embodiment of the fluid control device, the slide member is, for example, a stem having one conical end portion tapered toward an extremity thereof, the stem being made of the alloy in its entirety and being provided with a handle attached to the other end portion thereof, the stem having an externally threaded intermediate portion screwed in an internally threaded portion formed in the vertical passage.

As another preferred embodiment of the fluid control device, the slide member comprises a solid cylindrical stem and a conical disk fitted around one end of the stem and tapered toward an outer end thereof, the disk being made of the alloy, the stem being provided with a handle attached to the other end thereof, the stem having an externally threaded intermediate portion screwed in an internally threaded portion formed in the vertical passage. The former embodiment remains unincreased in the number of components, while the device of the latter type permits common use of components, and diminishes an increase in cost to due a change of material.

### BRIEF DESCRIPTION OF THE DRAWINGS

FIG. 1 is a sectional view showing a first embodiment of fluid control device according to the invention.
FIG. 2 is a sectional view showing a second embodiment of fluid control device according to the invention.

### BEST MODE OF CARRYING OUT THE INVENTION

Embodiments of the invention will be described below with reference to the drawings. In the following description, the terms "left" and "right" refer respectively to the left- and right-hand sides of the drawings.

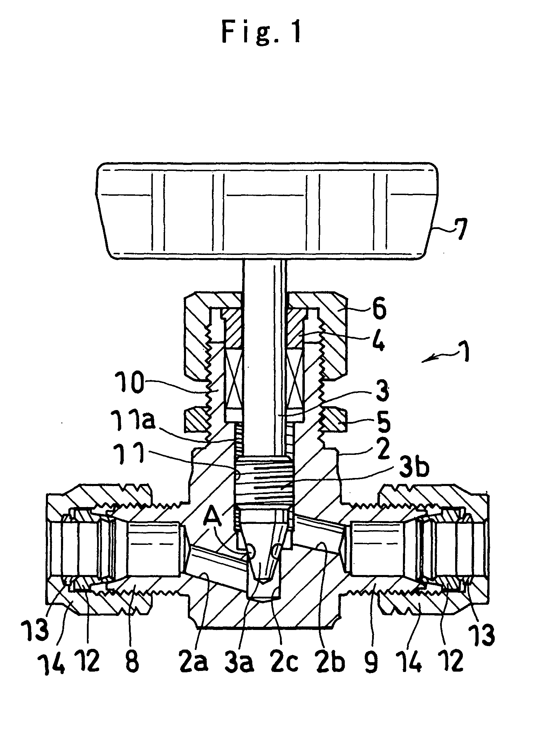

FIG. 1 shows a first embodiment of fluid control device of the present invention.

The fluid control device 1 of this embodiment is a needle stop valve, which comprises a bottomed hollow cylindrical body 2 provided at a lower portion thereof with a tubular leftward projection 8 and a tubular rightward projection 9, a solid cylindrical stem 3 inserted in the body 2 upwardly and downwardly movably, a hollow cylindrical guide 4 fitted in an upper portion of the body 2 for guiding the upward and downward movement of the stem 3, a panel nut 5 screwed on the lower end of an externally threaded portion 10 formed on the outer periphery of upper part of the body 2, a cap nut 6 screwed on the top part of the threaded portion 10, and a handle 7 provided on the upper end of the stem 3.

The body 2 is provided at the lower portion thereof with a fluid inlet channel 2a extending from a position close to the center of the body slightly upwardly leftward and communicating with an inside channel of the leftward projection 8, a fluid outlet channel 2b extending from a position above the end, toward the center, of the inlet channel 2a slightly downwardly rightward and communicating with an inside channel of the rightward projection 9, and a communication channel 2c extending vertically to hold the two channels 2a, 2b in communication. The communication channel 2c is stepped to give a smaller diameter to the lower portion thereof than to the upper portion thereof. The body 2 has an inner peripheral surface positioned above the communication channel 2c and defining a stem guide passage 11 extending vertically. The stem guide passage 11 has an internally threaded lower portion 11a slightly extending into the communication channel 2c. The guide passage 11 has an upper portion having a larger diameter than the threaded portion 11a and having the hollow cylindrical guide 4 fitted therein.

The stem 23 has a conical lower end portion 3a tapered toward an extremity thereof, and an externally threaded portion 3b positioned above the conical portion 3a, having a larger diameter than the other portion and screwed in the internally threaded portion 11a of the body 2.

The guide 4 bears on a stepped portion at the upper end of the internally threaded portion 11a so as to cause the upper end of the guide to project beyond the upper end face of the body. The top wall of the cap nut 6 has a through hole for an upper end portion of the stem 3 to extend therethrough. The cap nut 6 is screwed on the externally threaded portion 10 of the body 2, whereby the guide 4 is fixed to the body 2. The upper end of the stem 3 extends upward beyond the cap nut 6 and has the handle 7 attached thereto.

The leftward projection 8 and the rightward projection 9 both tubular and positioned at the lower portion of the body 2 are each provided with a pipe coupling portion. Each of the projections 8, 9 is provided with a front ring 12 and a back ring 13 which are fitted around a pipe projecting from the projection, and with a cap nut 14 for tightening up the rings 12, 13 to fix the pipe to the projection 8 (9).

As to the materials of the members 2, 3, 4, 5, 6, 7, the body 2, panel nut 5 and cap nut 6 are made of SUS316, the guide 4 is made of PTFE and PFA, and the handle 7 is made of ADC12. The stem 3 is made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities.

With reference to FIG. 1, the portion indicated at A is very susceptible to abrasion since the fluid inlet channel 2a and the fluid outlet channel 2b extend in a direction intersecting the stem 3 which moves vertically. Accordingly, this portion is reinforced with a hardfacing material in conventional valves, whereas the alloy used for making the stem 3 in the present embodiment has high abrasion resistance, is therefore sufficiently durable without necessitating the hardfacing material and remains unimpaired in sealing effect even if used for a prolonged period of time. Because the alloy remains unimpaired in any of corrosion resistance, strength and hardness, the stem exhibits the above properties without entailing impairment of performance due to a change of material.

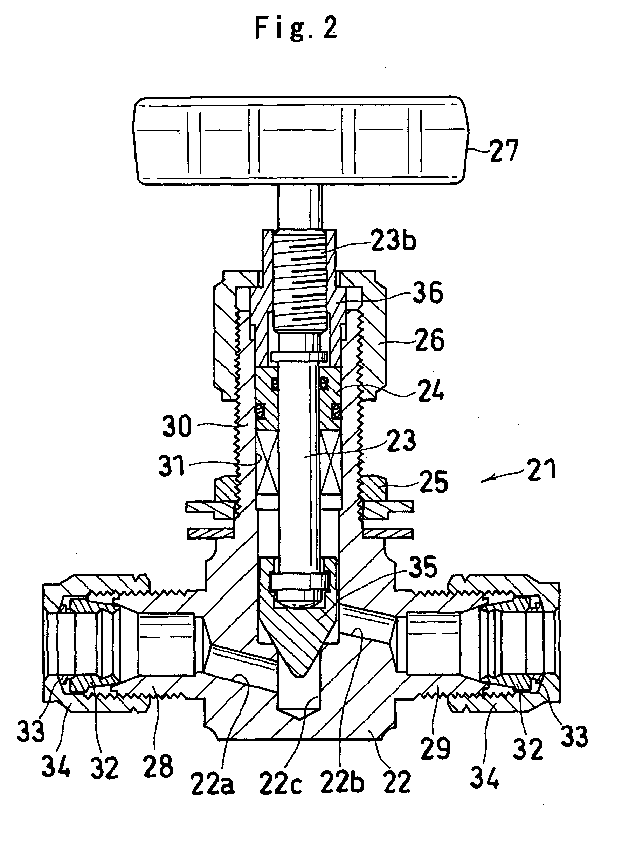

FIG. 2 shows a second embodiment of fluid control device of the invention.

The fluid control device 21 of this embodiment is a needle stop valve, which comprises a bottomed hollow cylindrical body 22 provided at a lower portion thereof with a tubular leftward projection 28 and a tubular rightward projection 29, a solid cylindrical stem 23 inserted in the body 22 upwardly and downwardly movably, a hollow cylindrical guide 24 fitted in an upper portion of the body 22 for guiding the upward and downward movement of the stem 23, a panel nut 25 screwed on the lower end of an externally threaded portion 30 formed on the outer periphery of upper part of the body 22, a cap nut 26 screwed on the top part of the threaded portion 10, a handle 27 provided on the upper end of the stem 23 and a disk 35 provided at the lower end of the stem 23.

The body 22 is provided at the lower portion thereof with a fluid inlet channel 22a extending from a position close to the center of the body slightly upwardly leftward and communicating with an inside channel of the leftward projection 28, a fluid outlet channel 22b extending from a position above the end, toward the center, of the inlet channel 22a slightly downwardly rightward and communicating with an inside channel of the rightward projection 29, and a communication channel 22c extending vertically to hold the two channels 22a, 22b in communication. The communication channel 22c is stepped to give a smaller diameter to the lower portion thereof than to the upper portion thereof. The body 22 has an inner peripheral surface positioned above the communication channel 22c and defining a stem guide passage 31 extending vertically. The stem guide passage 31 includes an upper portion having a slightly increased diameter and having the guide 24 fitted therein. The guide 24 is positioned in its entirety inside the stem guide passage 31. An internally threaded member 36 having an upper end projecting upward beyond the upper end of the body 22 is placed on the guide 24. The stem 23 has an externally threaded upper portion 23b in screw-thread engagement with the internally threaded member 36.

The top wall of the cap nut 26 has a through hole for an upper end portion of the internally threaded member 36 to extend therethrough. The cap nut 26 is screwed on the externally threaded portion 30 of the body 22, whereby the guide 24 and the internally threaded member 36 are fixed to the body 22. The upper end of the stem 23 extends upward beyond the cap nut 26 and has the handle 27 attached thereto.

The leftward projection 28 and the rightward projection 29 both tubular and positioned at the lower portion of the body 22 are each provided with a pipe coupling portion. Each of the projections 28, 29 is provided with a front ring 32 and a back ring 33 which are fitted around a pipe projecting from the projection, and with a cap nut 34 for tightening up the rings 32, 33 to fix the pipe to the projection 8 (9).

As to the materials of the members 22, 23, 24, 25, 26, 27, 35, the body 22, stem 23, panel nut 25 and cap nut 36 are made of SUS316, the guide 24 is made of PTFE and PCTFE, and the handle 27 is made of ADC12. The disk 35 is made of an alloy comprising, in % by weight, 0.001 to 0.01% of C, up to 5% of Si, up to 2% of Mn, up to 0.03% of P,_up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities.

With the second embodiment, the fluid inlet channel 22a and the fluid outlet channel 22b extend in a direction intersecting the direction of movement of the disk 53 which moves vertically, so that the outer periphery of the disk 35 is very susceptible to abrasion. Accordingly, the disk is reinforced with a hardfacing material in conventional valves, whereas the alloy used for making the disk 35 in the present embodiment has high abrasion resistance, is therefore sufficiently durable without necessitating the hardfacing material and remains unimpaired in sealing effect even if used for a prolonged period of time. Because the alloy remains unimpaired in any of corrosion resistance, strength and hardness, the disk exhibits the above properties without entailing impairment of performance due to a change of material.

According to the foregoing first and second embodiments, the body 2(22) has couplings as included respectively in the leftward projection 8 (28) and the rightward projection 9 (29), while one of the projections may be provided as projected downward. The couplings are of the flareless type comprising a front ring 12 (32) and a back ring 13(33), and a cap nut 14 (34), whereas they may alternatively be of the screw-thread tightening type comprising an externally threaded member and an internally threaded member. Further alternatively, the couplings may be of the projection-cavity fitting type or the flange connection type.

### INDUSTRIAL APPLICABILITY

The fluid control device of the present invention has excellent corrosion resistance, is usable in place of conventional fluid control devices, such as valves, and therefore serves to improve the corrosion resistance of fluid control devices for use in an environment liable to cause corrosion.

## Claims

1. A fluid control device comprising a metal body having a fluid inlet channel, a fluid outlet channel and a communication channel for holding the two channels in communication, and a metal slide member vertically movable in a vertical passage including the communication channel for closing or opening the communication channel with an end portion thereof, the fluid control device being **characterized in that** that at least the end portion of the slide member is made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities.

2. A fluid control device according to claim 1 wherein the slide member is a stem having one conical end portion tapered toward an extremity thereof, the stem being made of said alloy in its entirety and being provided with a handle attached to the other end portion thereof, the stem having an externally threaded intermediate portion screwed in an internally threaded portion formed in the vertical passage.

3. A fluid control device according to claim 1 wherein the slide member comprises a solid cylindrical stem and a conical disk fitted around one end of the stem and tapered toward an outer end thereof, the disk being made of said alloy, the stem being provided with a handle attached to the other end thereof, the stem having an externally threaded intermediate portion screwed in an internally threaded portion formed in the vertical passage.
